# EUROPEAN PATENT SPECIFICATION

(11) **EP 1 558 405 B1**
(45) Date of publication and mention of the grant of the patent: **29.07.2009**
(21) Application number: 03750940.3
(22) Date of filing: 18.09.2003
(51) Int. Cl.: B07B 1/46, B01D 33/03

(54) **Vibratory separator and method for treating fluid**
Vibrationstrennvorrichtung und Verfahren zum Behandeln einer Flüssigkeit
Separateur vibrant et méthode pour traitement de fluide

(30) Priority: 04.11.2002 US 287056
(43) Date of publication of application: 03.08.2005
(73) Proprietor: Varco I/P, Inc., Houston TX 77042-4200 (US)
(72) Inventor: SEYFFERT, Kenneth, Wayne, Houston, TX 77018 (US); MCCLUNG, Guy, Lamont, III, Spring, TX 77379 (US); STRONG, Gary, Steven, Huntsville, TX 77340 (US)
(74) Representative: Lucas, Brian Ronald
(86) International application number: PCT/GB2003/004056
(87) International publication number: WO 2004/041451

(56) References cited:
- WO-A-96/33792
- WO-A-98/16328
- US-A- 4 495 065
- US-A- 6 079 568
- US-B1- 6 412 644

## Description

The present invention relates to a vibratory separator and shale shakers, and, in certain particular aspects, to multi-deck separators and shakers with flow diffusers for diffusing fluid flowing from an upper deck to a lower deck.

In the drilling of a borehole in the construction of an oil or gas well, a drill bit is arranged on the end of a drill string and is rotated to bore the borehole. A drilling fluid known as "drilling mud" is pumped through the drill string to the drill bit to lubricate the drill bit. The drilling mud is also used to carry the cuttings produced by the drill bit and other solids to the surface through an annulus formed between the drill string and the borehole. The drilling mud contains expensive synthetic oil-based lubricants and it is normal therefore to recover and re-use the used drilling mud, but this requires the solids to be removed from the drilling mud. This is achieved by processing the drilling fluid. The first part of the process is to separate the solids from the solids laden drilling mud. This is at least partly achieved with a vibratory separator, such as those shale shakers disclosed in US 5,265,730, WO 96/33792 and WO 98/16328.

Shale shakers generally comprise an open bottomed basket having one open discharge end and a solid walled feed end. A number of rectangular screens are arranged in the basket, which are held in C-channel rails located on the basket walls, such as those disclosed in GB-A-2,176,424. The basket is arranged on springs above a receptor for receiving recovered drilling mud. A skip or ditch is provided beneath the open discharge end of the basket. A motor is fixed to the basket, which has a drive rotor provided with an offset clump weight. In use, the motor rotates the rotor and the offset clump weight, which causes the basket and the screens fixed thereto to shake. Solids laden mud is introduced at the feed end of the basket on to the screens. The shaking motion induces the solids to move along the screens towards the open discharge end. Drilling mud passes through the screens. The recovered drilling mud is received in the receptor for further processing and the solids pass over the discharge end of the basket into the ditch or skip.

The screens are generally of one of two types: hook-strip; and pre-tensioned.

The hook-strip type of screen comprises several rectangular layers of mesh in a sandwich, usually comprising one or two layers of fine grade mesh and a supporting mesh having larger mesh holes and heavier gauge wire. The layers of mesh are joined at each side edge by a strip which is in the form of an elongate hook. In use, the elongate hook is hooked on to a tensioning device arranged along each side of a shale shaker. The shale shaker further comprises a crowned set of supporting members, which run along the length of the basket of the shaker, over which the layers of mesh are tensioned. An example of this type of screen is disclosed in GB-A-1,526,663. The supporting mesh may be provided with or replaced by a panel having apertures therein.

The pre-tensioned type of screen comprises several rectangular layers of mesh, usually comprising one or two layers of fine grade mesh and a supporting mesh having larger mesh holes and heavier gauge wire. The layers of mesh are pre-tensioned on a rigid support comprising a rectangular angle iron frame and adhered thereto. The screen is then inserted into C-channel rails arranged in a basket of a shale shaker. An example of this type of screen is disclosed in GB-A-1,578,948.

Various prior art vibratory separators and shale shakers have one or more upper screening decks positioned above one or more lower screening decks. Such as the shale shaker disclosed in WO 96/33792 co-owned by the present applicant. WO 96/33792 discloses a an assembly for vibrating screens, the assembly comprising a base, a basket mounted on said base and movable with respect thereto, apparatus for vibrating said basket, a sump below the basket, an upper screen support and a lower screen support wherein a portion of the lower screen support underlies the upper screen support, characterised in that a flow back pan is disposed between the upper screen support and the lower screen support so that, in use, an upper screen mounted on said upper screen support discharges on to a lower screen mounted on said lower screen support whilst said flow back pan prevents material which passes through the upper screen from contacting the lower screen and directs said material into said sump. In some shale shakers, fluid flows through the upper deck(s) to the lower deck(s), often upper deck(s) are positioned so that an exit end of the upper deck(s) is above part of a lower deck. Fluid, as in the shale shaker disclosed in WO 96/33792, flows directly from an upper deck to a lower deck without passing through screening, screens, or screen assemblies on the upper deck. In some circumstances, for example at relatively high fluid flow rates, the inventors have noted that fluid flowing from an upper deck to a lower deck can create a water barrier on the lower deck which impedes the desired movement of solids on the lower deck to an exit end of the lower deck. Such a fluid flow can also wear out part of the lower deck prematurely, resulting in poor performance and operation down time to fix or replace part of the lower deck.

In accordance with the present invention, there is provided a vibratory separator comprising a basket for holding screening apparatus, at least one upper screening apparatus in the basket, the at least one upper screening apparatus having a fluid exit end, at least one lower screening apparatus in the basket below the at least one upper screening apparatus characterised in that a flow diffusion apparatus is mounted below the fluid exit end of the at least one upper screening apparatus and above the at least one lower screening apparatus. It is preferable that, in use, particle laden fluid flowing down from the at least one upper screen apparatus flows onto the flow diffusion apparatus and is diffused thereby, the diffused fluid flow lands on the lower screening apparatus.

Advantageously, the flow diffusion apparatus comprises at least one hole therethrough, such that advantageously at least a portion of the fluid is passable through the at least one hole and serves to facilitae diffusion of the particle laden fluid. Preferably, the at least one hole is a plurality of spaced-apart holes. Advantageously, at least one of the at least one hole passes through the flow diffusion apparatus and is substantially normal thereto. Advantageously, at least one of the at least one hole passes through the flow diffusion apparatus and is at an angle other than normal thereto. Preferably, the holes pass through the flow diffusion apparatus at different angles thereto.

Advantageously, the flow diffusion apparatus is made from material from the group consisting of: plastic; metal; fibreglass; wood; composite material; cermet; and ceramic.

Preferably, the at least one lower screening apparatus comprises a lowermost screening apparatus and an intermediate screen apparatus, the intermediate screening apparatus positioned between the at least one upper screening apparatus and the lowermost screening apparatus. Advantageously, a flow diffuser of the invention is positioned between the intermediate screening apparatus and the lowermost screening apparatus.

Advantageously, the flow diffusion apparatus comprises a main part with a first side and a second side, a first side connected to and projecting upwardly from the first side of the main part, and a second side connected to and projecting upwardly from the main part side.

Preferably, the flow diffusion apparatus is positioned substantially horizontally in the vibratory separator. Alternatively, the flow diffusion apparatus is positioned at an angle to the horizontal in the vibratory separator or have parts which are horizontal and parts which are at an angle to the horizontal. The flow diffusion apparatus is preferably positioned either horizontally or at an angle to a base or mount of a separator or shaker.

The vibratory separator of the invention is particularly but not exclusively a shale shaker for use in separating drilling fluid from solids. The solids may be, for example, cuttings, debris.

Preferably, the flow diffusion apparatus comprises multiple parts securable together in a plurality of positions to provide a plurality of surfaces of different areas for impact by fluid flowing down from the at least one upper screen apparatus. Advantageously, the flow diffusion apparatus is adjustable in surface area to intercept a substantial portion of the fluid flowing down from the at least one upper screen apparatus. Preferably, the at least one upper screening apparatus has a width and the flow diffusion apparatus has a width less than that of the at least one upper screen apparatus. Advantageously, the flow diffusion apparatus viewed on end has curved shape.

Preferably, the screening apparatus comprises a screen assembly. Advantageously, the screen assembly comprises screening material and hook strips. Preferably, the screen assembly comprises a frame and screening material, the screening material pre-tensioned on the frame.

The present invention also provides a method for treating fluid with a vibratory separator of the invention, the method comprising the steps of introducing particle laden fluid into the basket on to the first screening apparatus, a portion of the particle laden fluid passing fluid over an exit end of the first screening apparatus on to the flow diffusion apparatus diffusing the portion of particles laden fluid and landing on the lower screening apparatus.

Preferably, the flow diffusing apparatus of the present invention has multiple parts so that its length and/or width are adjustable to accommodate a flow of a certain width or cross-sectional area. In certain aspects the flow diffusing apparatus is generally flat. In other aspects it is "V" or "U" shaped when viewed in cross-section or on end. In certain aspects, such a flow diffusing apparatus is positioned relatively horizontally in a separator or shaker; and in other aspects it is positioned at an angle to the fluid flowing from above, canted either toward a fluid introduction end or toward a fluid exit end of the shaker or separator. Such systems and methods with one or more fluid flow holes, openings, or perforations in a flow diffusion apparatus; and, in curtain aspect, with area, length, and/or width adjustment to accommodate a flow of a particular area.

The invention provides a vibratory separator or shale shaker with flow diffusing apparatus positioned below an exit end of an upper deck in a multi-deck machine and above a lower deck. The flow diffusing apparatus is preferably located to intercept all, a significant part of, or the bulk of fluid flowing down from the upper deck thereby diffusing it to prevent it from impacting on a relatively small area of the lower deck and to spread the flow out over a larger area.

For a better understanding of the present invention, reference will now be made, by way of example, to the accompanying drawings, in which:
Figure 1 is a schematic of a side view in cross-section of a shale shaker in accordance with the present invention comprising a flow diffusion apparatus in accordance with the present invention;
Figure 2 is a schematic of a side view in cross-section of a shale shaker in accordance with the present invention comprising a flow diffusion apparatus in accordance with the present invention;
Figure 3 is a schematic of a side view in cross-section of a shale shaker in accordance with the present invention comprising a flow diffusion apparatus in accordance with the present invention;
Figure 4 is a top view of the flow diffusion apparatus of the shale shaker of Figure 3;
Figure 5 is a cross-sectional view of a flow diffusion apparatus in accordance with the present invention;
Figure 6A is a top view of a flow diffusion apparatus in accordance with the present invention;
Figure 6B is a side cross-sectional view of the flow diffusion apparatus of Figure 6A;
Figure 7 is a side view of a flow diffusion apparatus in accordance with the present invention;
Figure 8 is a side of a flow diffusion apparatus in accordance with the present invention; and
Figure 9 is a side view of screen assemblies in a shale shaker in accordance with the present invention with flow diffusion apparatus in accordance with the present invention.

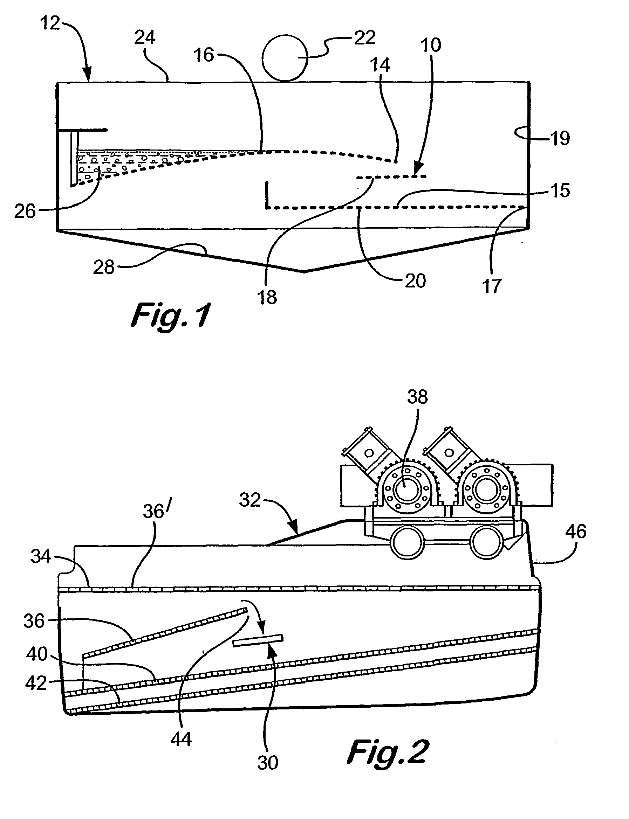

Figure 1 shows a shale shaker 12 in accordance with the present invention with a flow diffusion apparatus 10 in accordance with the present invention. Fluid flowing from an exit end 14 of an upper screening deck 16 hits the flow diffusion apparatus 10. Without the flow diffusion apparatus 10 in place, the fluid flowing from above would impact an area 15 on a lower screening deck 20. A basket 24 supports the screening decks. The flow diffusion apparatus 10 (as may be the case for any such apparatus in accordance with the present invention) is secured to the basket 24. It is also within the scope of the present invention for the flow diffusion apparatus 10 (as may be any flow diffusion apparatus in accordance with the present invention) to be connected to the upper screens deck, the lower screen deck, or both in addition to, or instead of, securement to the basket 24.

The flow diffusion apparatus 10 (as may any apparatus in accordance with the present invention) has one or a series of holes 18 therethrough which permit fluid to flow therethrough down onto the lower screening deck 20.

A vibratory apparatus 22 (shown schematically) vibrates a basket 24 in which the upper screening deck 16 and lower screening deck 20 are mounted. Particle laden Fluid to be treated is introduced into a pool end 26 of the shale shaker 12. The separated fluid and small particles flows from both screening decks down into a collection receptacle 28. Separated material exits from an exit end 17 of the lower screening deck 20.

Figure 2 shows a shale shaker 32 in accordance with the present invention with a flow diffusion apparatus 30 in accordance with the preset invention. Fluid introduced at a fluid introduction end 34 of the shale shaker 32 flows to an upper screening deck 36. The major portion of this fluid flows from the upper screening deck 36 to an intermediate screening deck 40 and through the intermediate screening deck 40 to a lower screening deck 42. Fluid flowing from an end 44 of the intermediate screening deck 40 (see arrow, Figure 2) flows down onto the flow diffusion apparatus 30 which, in the embodiment shown, is a solid plate; but which, according to the present invention, may have one or more holes, etc. for fluid flow therethrough.

Vibrator apparatus 38 vibrates a screen mounting basket 46 in which the screening decks are located.

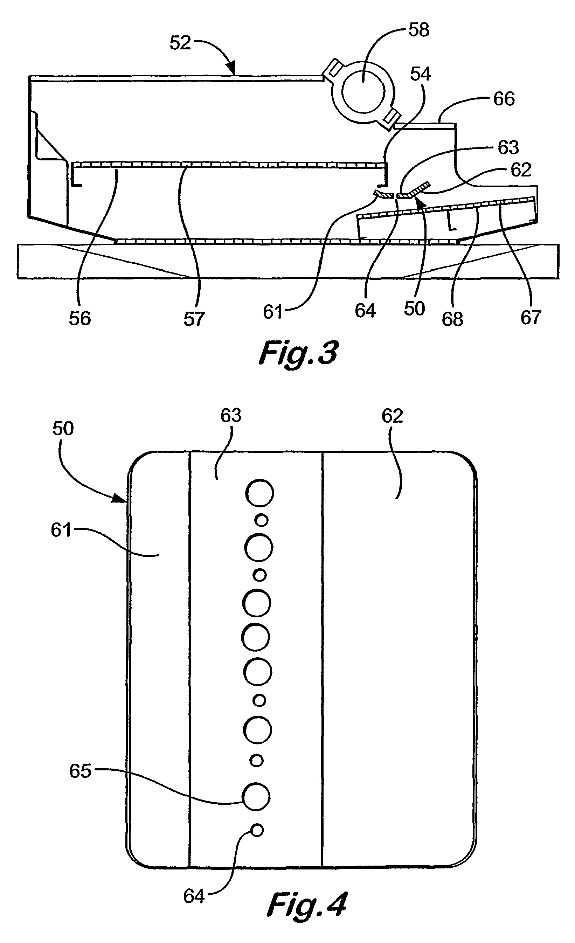

Figure 3 shows a shale shaker 52 according to the present invention which has a flow diffusion apparatus 50 in accordance with the present invention which is positioned below a fluid exit end 54 of an upper screening deck 56 with screen assembly (or assemblies) 57 [which, as may be any screen etc. of any embodiment herein, may be any suitable known screen(s), screen apparatus(es), or screen assembly or assemblies]. Viewed on end the flow diffusion apparatus has two sides 61, 62 spaced apart by a flat part 63 in a truncated "V" shape, but it is within the scope of this invention for any flow diffusion apparatus herein to be "V" shaped, "U" shaped, truncated "V" or "U" shaped, or flat. In one aspect side 61 and/or side 62 is deleted.

Fluid flowing from the fluid exit end 54 of the upper screening deck 56 falls into the flow diffusion apparatus 50 and moves from there down onto a lower screening deck 68 with a screen assembly 67 thereon [which, as may be any screen etc. of any embodiment herein, may be any suitable known screen(s), screen apparatus(es), or screen assembly or assemblies]. The shale shaker 52 is vibrated using a drive motor 58 arranged at a discharge end 66 of the shale shaker.

Vibrator apparatus 58 vibrates a screen mounting basket 66 in which are secured the screening decks 56 and 68.

Figure 4 shows the flow diffusion apparatus 50 (top view) with its holes 64, 65.

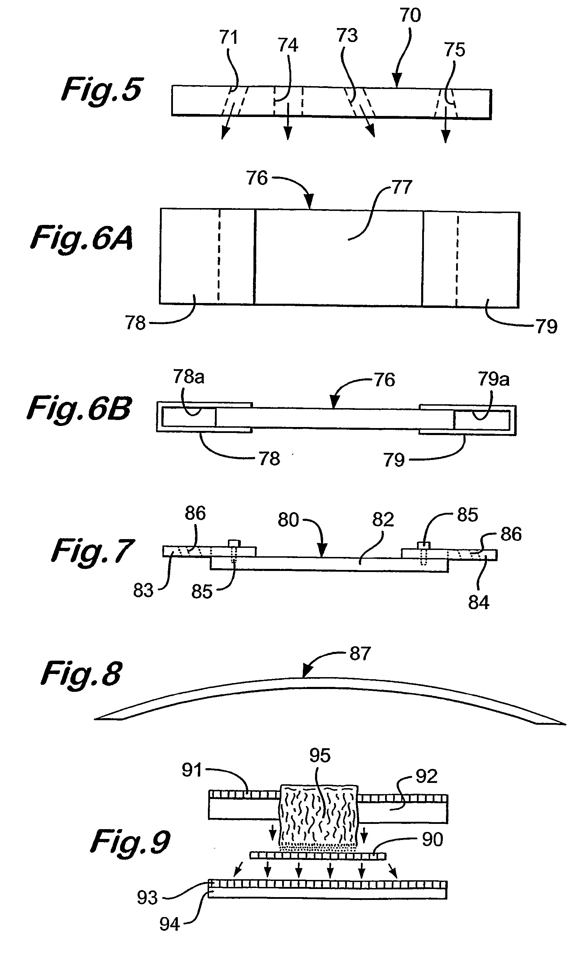

Figure 5 illustrates alternative configurations for any hole of any flow diffusion apparatus according to the present invention. A hole 71 through a flow diffusion apparatus 70 in accordance with the present invention is at an angle (non-normal) to a body 72 of the flow diffusion apparatus 70; a hole 73 is at another angle (non-normal) to the body 72; a hole 74 is straight through the body 72 and normal to the body 72; and a hole 75 is generally conical viewed in cross-section as shown in Figure 5 and is smaller in size at the top of the body 72 than at the bottom, although it is within the scope of this invention to invert the conical shape as shown in Figure 5. (Arrows through holes indicate flow direction).

Although the flow diffusion apparatus in Figures 1 to 3 have been shown in specific vibratory separators, it is within the scope of the present invention for any flow diffuser according to the present invention to be used with any multi-deck separator or shaker; for example, but not limited to those as disclosed in U.S. patents 6,412,644 and 6,155,428 and in the references cited therein; and in PCT Application No. PCT/EP96/01835, publication No. WO 96/33792 - all of particular aspect the body or pieces of the flow diffusion apparatus are made of steel, about 6mm (1/4") thick. In other aspects this thickness is 19mm (3/4") although any suitable thickness may be used.

Any flow diffusion apparatus herein may be any desired size and configuration. Although the apparatuses shown herein are generally rectangular, it is within the scope of this invention to have flow diffusers that are, viewd from above, any desired shape, including, but not limitid to, oval, elliptical, trapezoidal, triangular, square, or polygonal.

Any flow diffusion apparatus according to the present invention may be made from any suitable material, including, but not limited to, plastic, metal, fiberglass, wood, composite material, cermet, and ceramic.

Figures 6A and 6B show a flow diffuser 76 according to the present invention with a main part 77 and two extendable side parts 78,79 each with a recess 78a, 79a, respectively, which receives a portion of the main part 77. By adjusting the amount of the main part 77 that is within the recesses 78a, 79a, the effective width of the flow diffuser 76 can be adjusted to accommodate the width of a flow, or part thereof , from an upper screen deck the parts can be held together with a friction fit and/or with any suitable connector(s) and/or adhesive (s). As shown the flow diffuser 76 is oriented for width extension of its parts, for example, toward the sides of a shale shaker, but it is within the scope of this invention for the flow diffuser 76 to be oriented so that it is adjustable in directions generally aligned with the length of a shale shaker. It is also within the scope of the present invention for a shale shaker in accordance with the present invention to have extendable parts for adjusting the extent of a flow diffuser in both length and width 80 that an area (in length and in width) of a flow from above may above accommodated.

Figure 7 shows a flow diffuser 80 according to the present invention that has a main part 82 to which are secured side parts 83, 84 with one or more bolts 85. The side parts 83,84 may be any desirable size and may have a series of holes 86 to provide for size (length, with, and/or area) adjustment.

Figure 8 shows a flow diffuser 87 according to the present invention which has (as may any flow diffuser herein) a generally curved shape when viewed on end.

Figure 9 shows a flow diffuser 90 according to the present invention beneath an upper screen deck 92 with a screen assembly 91 thereon and above a lower screen deck 94 with a screen assembly 93 thereon (of a shale shaker, not shown in its entirety). Although fluid and material flows off the entire width of the upper screen deck 92, a main flow 95 flows down from a generally central portion of the upper screen deck 92 and impacts the flow diffuser 90. Arrows indicate how the flow diffuser spreads out the flow from the upper deck 92 onto the lower screen deck 94. Although the flow diffuser 90 is shown with a width less than the width of the upper screen deck 92, it is within the scope of this invention for the flow diffuser 90 (as may be any flow diffuser according to the present invention) to have a width only slightly less than that of an upper screen deck, or to be of any desired width.

## Claims

1. A vibratory separator comprising a basket (19) for holding screening apparatus (16,20), at least one upper screening apparatus (16) in said basket (19), said at least one upper screening apparatus (16) having a fluid exit end (14), at least one lower screening apparatus (20) in said basket (19) below said at least one upper screening apparatus (16) **characterised in that** a flow diffusion apparatus (10) is mounted below said fluid exit end (14) of said at least one upper screening apparatus (16) and above said at least one lower screening apparatus (20).

2. A vibratory separator as claimed in Claim 1, wherein said flow diffusion apparatus (10) comprises at least one hole (64,65) therethrough.

3. A vibratory separator as claimed in Claim 2, wherein said at least one hole (64,65,71,73,74,75) is a plurality of spaced-apart holes.

4. A vibratory separator as claimed in Claim 2 or 3 wherein said at least one of said at least one hole (74) passes through said flow diffusion apparatus (10) and is substantially normal thereto.

5. A vibratory separator as claimed in Claim 2, 3 or 4, wherein said at least one of said at least one hole (71,73) passes through said flow diffusion apparatus (10) and is at an angle other than normal thereto.

6. A vibratory separators as claimed in Claim 3, wherein said holes (71,73,75) pass through said flow diffusion apparatus (10) at different angles thereto.

7. A vibratory separator as claimed in any preceding Claim, wherein said flow diffusion apparatus (10) is made from material from said group consisting of: plastic; metal; fibreglass; wood; composite material; cermet; and ceramic.

8. A vibratory separator as claimed in any preceding claim, wherein said at least one lower screening apparatus (20) comprises a lowermost screening apparatus (42) and an intermediate screening apparatus (40), said intermediate screening apparatus (40) positioned between said at least one upper screening apparatus (36) and said lowermost screening apparatus.

9. A vibratory separator as claimed in any preceding claim, wherein said flow diffusion apparatus (10) comprised a main part (63) with a first side and a second side, a first side (61) connected to and projecting upwardly from said first side of said main part, and a second sidle (62) connected to and projecting upwardly from said main part side.

10. A vibratory separator as claimed in any preceding claim, wherein said flow diffusion apparatus (10) is positioned substantially horizontally in said vibratory separator.

11. A vibratory separator as claimed in any preceding claim, wherein said flow diffusion apparatus (10) is positioned at an angle to said horizontal in said vibratory separator.

12. A vibratory separator as claimed in any preceding claim, wherein said vibratory separator is a shale shaker and said fluid comprises drilling fluid with solids therein.

13. A vibratory separator as claimed in any preceding claim, wherein said flow diffusion apparatus (10) comprises multiple parts (77,78,79) securable together in a plurality of positions to provide a plurality of surfaces of different areas for impact by fluid flowing down from said at least one upper screening apparatus (16)**.**

14. A vibratory separator as claimed in any preceding claim, wherein said flow diffusion apparatus (80) is adjustable in surface area to intercept a substantial portion of said fluid flowing down from said at least one upper screening apparatus.

15. A vibratory separator as claimed in any preceding claim, wherein said at least one upper screening apparatus (16) has a width and said flow diffusion apparatus (10) has a width less than that of said at least one upper screening apparatus (16).

16. A vibratory separator as claimed in any preceding claim, wherein said flow diffusion apparatus (87) viewed on end has curved shape.

17. A vibratory separator as claimed in any preceding claim, wherein said screening apparatus (16,20) comprises a screen assembly.

18. A vibratory separator as claimed in Claim 17, wherein said screen assembly comprises screening material and hook strips.

19. A vibratory separator as claimed in Claim 17 or 18, wherein said screen assembly comprises a frame and screening material, said screening material pre-tensioned on said frame.

20. A method for treating fluid with a vibratory separator as claimed in any of claims 1 to 19, the method comprising tho steps of introducing particle laden fluid into said basket (19) on to said first screening apparatus (16), a portion of said particle laden fluid passing fluid over an exit end (14) of said first screening apparatus (16) on to said flow diffusion apparatus (10) diffusing said portion of particles laden fluid and landing on said lower screening apparatus (20).

## Patentansprüche

1. Vibrationssichter, der umfasst: einen Korb (19), um eine Siebvorrichtung (16, 20) zu halten, wenigstens eine obere Siebvorrichtung (16) in dem Korb (19), wobei die wenigstens eine obere Siebvorrichtung (16) ein Fluidaustrittsende (14) besitzt, und wenigstens eine untere Siebvorrichtung (20) in dem Korb (19) unterhalb der wenigstens einen oberen Siebvorrichtung (16), **dadurch gekennzeichnet, dass** unter dem Fluidaustrittsende (14) der wenigstens einen oberen Siebvorrichtung (16) und über der wenigstens einen unteren Siebvorrichtung (20) eine Strömungsdiffusionsvorrichtung (10) angebracht ist.

2. Vibrationssichter nach Anspruch 1, wobei die Strömungsdiffusionsvorrichtung (10) wenigstens ein durch sie verlaufendes Loch (64, 65) umfasst.

3. Vibrationssichter nach Anspruch 2, wobei das wenigstens eine Loch (64, 65, 71, 73, 74, 75) mehrere voneinander beabstandete Löcher umfasst.

4. Vibrationssichter nach Anspruch 2 oder 3, wobei das wenigstens eine des wenigstens einen Lochs (74) durch die Strömungsdiffusionsvorrichtung (10) verläuft und zu dieser im Wesentlichen senkrecht ist.

5. Vibrationssichter nach Anspruch 2, 3 oder 4, wobei das wenigstens eine des wenigstens einen Lochs (71, 73) durch die Strömungsdiffusionsvorrichtung (10) verläuft und hierzu einen von einem rechten Winkel verschiedenen Winkel bildet.

6. Vibrationssichter nach Anspruch 3, wobei die Löcher (71, 73, 75) durch die Strömungsdiffusionsvorrichtung (10) unter verschiedenen Winkeln hierzu verlaufen.

7. Vibrationssichter nach einem vorhergehenden Anspruch, wobei die Strömungsdiffusionsvorrichtung (10) aus einem Material aus der Gruppe hergestellt ist, die besteht aus: Kunststoff; Metall; Glasfaser; Holz; Verbundmaterial; Cermet; und Keramik.

8. Vibrationssichter nach einem vorhergehenden Anspruch, wobei die wenigstens eine untere Siebvorrichtung (20) eine unterste Siebvorrichtung (42) und eine Zwischensiebvorrichtung (40) umfasst, wobei die Zwischensiebvornchtung (40) zwischen der wenigstens einen oberen Siebvorrichtung (36) und der untersten Siebvorrichtung positioniert ist.

9. Vibrationssichter nach einem vorhergehenden Anspruch, wobei die Strömungsdiffusionsvorrichtung (10) einen Hauptabschnitt (63) mit einer ersten Seite und einer zweiten Seite, eine erste Seite (61), die mit der ersten Seite des Hauptabschnitts verbunden ist und hiervon nach oben vorsteht, und eine zweite Seite (62), die mit der Hauptabschnittsseite verbunden ist und hiervon nach oben vorsteht, umfasst.

10. Vibrationssichter nach einem vorhergehenden Anspruch, wobei die Strömungsdiffusionsvorrichtung (10) in dem Vibrationssichter im Wesentlichen horizontal positioniert ist.

11. Vibrationssichter nach einem vorhergehenden Anspruch, wobei die Strömungsdiffusionsvorrichtung (10) in dem Vibrationssichter unter einem Winkel zu der Horizontalen positioniert ist.

12. Vibrationssichter nach einem vorhergehenden Anspruch, wobei der Vibrationssichter ein Schlammschüttelsieb ist und das Fluid Bohrfluid mit darin enthaltenen Feststoffen umfasst.

13. Vibrationssichter nach einem vorhergehenden Anspruch, wobei die Strömungsdiffusionsvorrichtung (10) mehrere Abschnitte (77, 78, 79) umfasst, die an mehreren Positionen aneinander befestigbar sind; um mehrere Oberflächen mit verschiedenen Flächeninhalten, auf die Fluid auftrifft, das von der wenigstens einen oberen Siebvorrichtung (16) abwärts strömt, zu schaffen.

14. Vibrationssichter nach einem vorhergehenden Anspruch, wobei der Flächeninhalt der Strömungsdiffusionsvorrichtung (80) einstellbar ist, um einen wesentlichen Anteil des von der wenigstens einen oberen Siebvorrichtung nach unten strömenden Fluids aufzufangen.

15. Vibrationssichter nach einem vorhergehenden Anspruch, wobei die wenigstens eine obere Siebvorrichtung (16) eine Breite besitzt und die Strömungsdiffusionsvorrichtung (10) eine Breite besitzt, die kleiner als jene der wenigstens einen oberen Siebvorrichtung (16) ist.

16. Vibrationssichter nach einem vorhergehenden Anspruch, wobei die Strömungsdiffusionsvorrichtung (87) bei Betrachtung an einem Ende eine gekrümmte Form hat.

17. Vibrationssichter nach einem vorhergehenden Anspruch, wobei die Siebvorrichtung (16, 20) eine Siebanordnung umfasst.

18. Vibrationssichter nach Anspruch 17, wobei die Siebanordnung Siebmaterial und Einhakstreifen umfasst.

19. Vibrationssichter nach Anspruch 17 oder 18, wobei die Siebanordnung einen Rahmen und Siebmaterial umfasst, wobei das Siebmaterial auf dem Rahmen vorgespannt ist.

20. Verfahren zum Behandeln von Fluid mit einem Vibrationssichter nach einem der Ansprüche 1 bis 19, wobei das Verfahren die Schritte des Einleitens von mit Partikeln angereichertem Fluid in den Korb (19) und auf die erste Siebvorrichtung (16) umfasst, wobei sich ein Anteil des mit Partikeln angereicherten Fluids über ein Austrittsende (14) der ersten Siebvorrichtung (16) auf die Strömungsdiffusionsvorrichtung (10) bewegt, die den Anteil von mit Partikeln angereichertem Fluid diffundiert, und auf der unteren Siebvorrichtung (20) auftrifft.

## Revendications

1. Séparateur vibrant comportant un panier (19) servant à maintenir l'appareil de séparation (16, 20), au moins un appareil de séparation supérieur (16) dans ledit panier (19), ledit, au moins un, appareil de séparation supérieur (16) comportant une extrémité de sortie de fluide (14), au moins un appareil de séparation inférieur (20) dans ledit panier (19) situé au-dessous dudit, au moins un, appareil de séparation supérieur (16), **caractérisé en ce qu'**un système de diffusion de l'écoulement (10) est monté au-dessous de ladite extrémité de sortie de fluide (14) dudit, au moins un, appareil de séparation supérieur (16) et au-dessus dudit, au moins un, appareil de séparation inférieur (20).

2. Séparateur vibrant selon la revendication 1, dans lequel ledit système de diffusion d'écoulement (10) comporte au moins un trou formé à travers lui (64, 65).

3. Séparateur vibrant selon la revendication 2, dans lequel ledit au moins un trou (64, 65, 71, 73, 74, 75) est constitué d'une pluralité de trous séparés les uns des autres.

4. Séparateur vibrant selon la revendication 2 ou 3 dans lequel ledit, au moins un trou dudit (desdits) trou(s) (74) traverse ledit système de diffusion d'écoulement (10) eL se présente de façon essentiellement perpendiculaire à lui.

5. Séparateur vibrant selon la revendication 2, 3 ou 4, dans lequel ledit au moins un trou dudit (desdits) trou(s) (71, 43) passe à travers ledit système de diffusion d'écoulement (10) et se présente suivant un angle autre que perpendiculairement à lui.

6. Séparateur vibrant selon la revendication 3, dans lequel lesdits trous (71, 73, 75) traversent ledit système de diffusion d'écoulement (10) suivant des angles différents par rapport à lui.

7. Séparateur vibrant selon l'une quelconque des revendications précédentes, dans lequel ledit système de diffusion d'écoulement (10) est constitué d'un matériau provenant dudit groupe constitué de: matière plastique ; métal ; fibre de verre ; bois ; matériau composite ; cermet ; et céramique.

8. Séparateur vibrant selon l'une quelconque des revendications précédentes, dans lequel ledit, au moins un, appareil de séparation inférieur (20) comprend un appareil de séparation le plus bas (42) et un appareil de séparation intermédiaire (40), ledit appareil de séparation intermédiaire (40) étant positionné entre ledit au moins un appareil de séparation supérieur (36) et ledit appareil de séparation le plus bas.

9. Séparateur vibrant selon l'une quelconque des revendications précédentes, dans lequel ledit système de diffusion d'écoulement (10) comporte une partie principale (63) doLée d'un premier côté et d'un second côté, un premier côté (61) étant connecté audit, et s'avançant vers le haut à partir dudit, premier côté de ladite partie principale, et un second côté (62) connecté audit, et s'avançant vers le haut à partir dudit, côté de la partie principale.

10. Séparateur vibrant selon l'une quelconque des revendications précédentes, dans lequel ledit système de diffusion d'écoulement (10) est positionné de façon essentiellement horizontale dans ledit séparateur vibrant.

11. Séparateur vibrant selon l'une quelconque des revendications précédentes, dans lequel ledit système de diffusion d'écoulement (10) est positionné suivant un angle par rapport à ladite horizontale dans ledit séparateur vibrant.

12. Séparateur vibrant selon l'une quelconque des revendications précédentes, dans lequel ledit séparateur vibrant est un tamis vibrant et ledit fluide comprend un fluide de forage comportant en lui des matières solides.

13. Séparateur vibrant selon l'une quelconque des revendications précédentes, dans lequel ledit système de diffusion d'écoulement (10) comporte de multiples parties (77, 78, 79) pouvant être fixées ensemble suivant une pluralité de positions en vue de fournir une pluralité de surfaces d'aires différentes pour recevoir l'impact du fluide s'écoulant vers le bas à partir dudit, au moins un, appareil de séparation supérieur (16).

14. Séparateur vibrant selon l'une quelconque des revendications précédentes, dans lequel ledit système de diffusion d'écoulement (80) peut être réglé en aire de surface pour intercepter une partie importante dudit fluide s'écoulant vers le bas à partir dudit, au moins un, appareil de séparation supérieur.

15. Séparateur vibrant selon l'une quelconque des revendications précédentes, dans lequel ledit, au moins un, appareil de séparation supérieur (16) a une certaine largeur et dans lequel ledit système de diffusion d'écoulement (10) présente une largeur inférieure à celle dudit au moins un appareil de séparation supérieur (16).

16. Séparateur vibrant selon l'une quelconque des revendications précédentes, dans lequel ledit système de diffusion d'écoulement (87), lorsque l'on observe son extrémité, présente une configuration courbe.

17. Séparateur vibrant selon l'une quelconque des revendications précédentes, dans lequel ledit appareil de séparation (16, 20) comporte un ensemble de cribles.

18. Séparateur vibrant selon la revendication 17, dans lequel ledit ensemble de cribles comporte un matériau de séparation et des bandes à crochets.

19. Séparateur vibrant selon la revendication 17 ou 18, dans lequel ledit ensemble de cribles comporte une structure et un matériau de séparation, ledit matériau de séparation étant pré-étendu sur ladite structure.

20. Procédé de traitement d'un fluide avec un séparateur vibrant selon l'une quelconque des revendications 1 à 19, le procédé comprenant les étapes consistant à introduire un fluide chargé en particules dans ledit panier (19) sur ledit premier appareil de séparation (16), une partie dudit fluide chargé en particules laissant passer du fluide par une extrémité de sortie (14) dudit premier appareil de séparation (16) sur ledit système de diffusion d'écoulement (10), diffusant ladite partie de fluide chargé en particules et tombant sur ledit appareil de séparation inférieur (20).
